# EUROPEAN PATENT APPLICATION

(11) **EP 1 363 203 A1**
(43) Date of publication of application: **19.11.2003**
(21) Application number: 02405393.6
(22) Date of filing: 15.05.2002
(51) Int. Cl.: G06F 17/30

(54) **System and method for searching information automatically according to analysed results**

(71) Applicant: ABB RESEARCH LTD., 8050 Zürich (CH)
(72) Inventor: Karhu, Katja, 5405 Baden (CH)
(74) Representative: ABB Patent Attorneys

(57) **Abstract**

The present invention is a system and method for automatically providing users with good quality information from plurality of information sources. The information supplied to the user through push technology from first information source is filtered to extract relevant information. This information is then categorized and stored in host database. Further analysis is done on the categorized information to identify further search criteria. Based on further search criteria new search is carried out in another information source to obtain related information. Results of further search along with the stored information are presented to the user in user-friendly format.

## Description

### Technical Area

The present invention relates generally to searching and processing of information. More particularly, the invention relates to a system and method for automatically searching for information in a plurality of information sources; the search being conducted based on analysis of information retrieved from a first information source.

### State of the Art Technology

The advent of the Internet and the World Wide Web (WWW) has opened a gateway for accessing vast amount of information on every conceivable topic. There are millions of WebPages containing information on varied topics accessible through the WWW. Besides the Internet, there are several databases hosted by companies, for storing and accessing data within a Local Area Network (LAN), Wide Area Network (WAN) or an extranet. The vast amount of information, however, makes it a painful task for a user to search for relevant information. This is primarily because the information relevant to the user is dispersed across the network on various sites and other databases. Visiting each of these sites to identify relevant information is a very time consuming and tedious process.

Several tools exist to assist the user in finding relevant information. A popular example of such a tool is a search engine. There are several search engines that restrict the search to only those Internet sites that contain relevant information. Some of the popular search engines available for searching information over the Internet are Google™, Northern Light™ and Altavista®. These search engines extract relevant information located at plurality of Internet websites. To find relevant information, the user formulates a search query by inputting one or more 'keywords', and submits the query to these search engines. In response to the query, the search engine displays a list of documents that match the query, typically as hyperlinks. The user can seek information in the document by activating a hyperlink. In this manner, the user essentially can 'pull' the information from the Internet.

Instead of the user searching for desired information through search engines, there exist systems in which the relevant information is directly sent to the user without the user actively requesting it. These are often referred to as 'push' systems and the associated technology as 'push' technology. In a conventional push system, the user defines the desired information profile to the information provider. The information profile may contain topics of interest, certain keywords or other search criteria. The information provider can be a company or a website. Once the user has defined the information profile, the information provider sends information regularly to the user's computer in accordance with the defined information profile, without any further intervention from the user. Push technology is used in many software products such as Webcasting (a feature of the Microsoft® Internet Explorer web browser) and Netcaster (part of Netscape ® Communicator suite). Prior to installation of the software, the user inputs data pertaining to areas in which the information is desired. Once installed, information like news, weather, stock quotes etc. may be updated on a periodic basis on the user's system.

Conventional pull and push systems suffer from several problems. For a search request, a large volume of irrelevant information is also generated along with the desired information. In case of search engines, links to thousands of documents may be displayed in response to a single search query. A large chunk of these displayed documents may be irrelevant. This happens primarily because they coincidently include the same keyword as mentioned in the search query. Identifying relevant information from large volumes of displayed results is both a time consuming and a daunting task. Similarly, in case of push technology, the information providers are the ones who have control on the exact nature of information to be sent and how the content should be received and viewed. Therefore, even though the user has specified his information profile, he may still receive lots of undesired information. Another problem associated with both the pull and push technologies is related to the analysis and classification of retrieved information. These systems merely display the information and the user has to spend valuable time in analysing the information in order to classify it into different categories.

To cope with the above problems many approaches have been suggested; there are tools that filter out irrelevant information and classify the search results according to several criteria. This enables placing all the relevant results together in easy to locate categories. To make the searching process even more convenient, the concept of 'intelligent searching' has evolved. This involves automatic searching for relevant information based on criteria defined by the user. The searched information is thereafter analysed to identify the exact relevant portion. Further, the finally identified information is presented to the user in a friendly format. In this manner, the user obtains 'intelligent' information without putting in much effort in the search or the analysis of the retrieved data.

Several patents that relate to 'intelligent searching' and analysis of data have been granted; some of these are mentioned hereinafter.

US Patent No. 6349295 titled 'Method and apparatus for performing supplemental searches over a network' has been assigned to Walker Digital, LLC, Stamford, CT, USA. This invention discloses a method and system, cooperating with a software program, for performing supplemental search over the Internet or other public networks. The invention can be configured with word processing software. While the user is busy editing a document on the word processing software, supplemental searches can be performed automatically in the background. The search may involve Internet based spelling or grammar checks, and automatic detection of adopting of new words and changes in acceptable grammar usage.

US Patent No. 6327586, titled 'System method and computer program product to automate the management and analysis of heterogeneous data', has been assigned to WisdomBuilder, LLC, Columbia, USA. This patent discloses a method for automating the collection, management and analysis of data. The methodology comprises four phases namely: Requirements, Collection, Analysis, and Reporting. Items of interests are collected from a user during the Requirements phase, which are put in a Personal Dictionary. The items of interest are organized according to user defined or pre-defined categories. These items of interest are also used to automatically conduct database searches to add further information. Collection phase is used to filter out irrelevant data and collect only the relevant data. Data files are automatically searched for items of interest from the Personal Dictionary. In addition, automation tools are used to determine the relevancy of documents based on the items of interest. Interactive visual displays are provided that classify the contents according to items of interest. Analysis phase is used to analyse, compare, relate, visualize, and understand the data, with respect to these items of interest. In the Reporting phase, reports are created using the results of the Analysis phase.

US Patent No. 6202062, titled 'System, method and article of manufacture for creating a filtered information summary based on multiple profiles of each single user', has been granted to AC Properties B.V., The Hague, NL. The invention discloses an agent based system which helps in obtaining information from an article of interest and uses the information to take user directed action based on the information from the target article. An example of calendar program is given, where the system stores information such as date, time and details of the meeting. As the time of meeting approaches, the agent extracts the details such as title, body, participants etc. from the calendar program. The information is then queried in various sources of information on the Internet. The relevant stories about the current meeting is obtained and sent back to calendaring system for display to the user.

US Patent No. 6301584 titled 'System and method for retrieving entities and integrating data' and US Patent No. 5999940 titled 'Interactive information discovery tool and methodology' have been assigned to Home Information Services, Inc., New York, USA. These inventions disclose a data integration system, which gathers information dynamically from one or more data sources and filters out the irrelevant details. The data sources may be located at different servers and may have incompatible formats. The system also provides for 'automatic content classification' for classifying the query results and displaying the information to the user in a configurable format.

US Patent No. 5978799, titled 'Search engine including query database, user profile database, information templates and email facility', unassigned by inventor, discloses a "supra-search tool" that automatically structures and organizes information requests and then independently searches in a variety of search engines and websites. These results are then organized and presented to the user.

US Patent No. 6272531, titled 'Method and system for recognizing and acting upon dynamic data on the Internet', has been assigned to International Business Machines Corporation, Armonk, NY, USA. In the disclosed method, the end-user specifies the data source and the data object to be monitored and also the recognition criteria for determining whether the data source is valid. The system monitors the data and triggers actions based on the changing state of the data. The action criteria are also specified by the user. In this manner, the system analyses the data according to specified criteria and takes appropriate action depending on the result of the analysis.

US Patent No. 5649186, titled 'System and method for a computer-based dynamic information clipping service', has been assigned to Silicon Graphics Incorporated, Mountain View, CA, USA. The method provides a dynamic information clipping service in which an end-user creates a template containing his topics of interest. The template is transmitted to a central site for processing, where query is made to the information repository using the key words in the template, to generate query results. Query results are then sorted and presented to the user in an HTML page.

Several search systems also exist in the market that filter out irrelevant information and classify the search results into easy to locate categories. BullsEye ®, a product of Intelliseek, Ohio, USA, is one such search tool. It is used to query hundreds of search engines on the World Wide Web simultaneously, refine the search results and cluster them by topic, country, type of site etc.

Although most of the patents mentioned above and others granted in USPTO, EPO and other patent offices as well as the products that exist in the market provide for retrieving information according to requirements of the user, they suffer from several disadvantages. They require the user to do manual inspection and further research on retrieved data to obtain detailed information on a specific search result. For example, consider the case of a user getting daily news on his computer. Systems exist that classify different news items into various categories such as sports, weather, breaking news etc. Now if the user wants additional information on a particular news item, he will have to do additional search manually for finding all information related to the particular news item. This process can be time consuming and tedious for the user. Indeed in applications where time is the limiting factor, the need for good quality relevant information at the right time is very critical.

Since searching for relevant information is a task that is performed by so many users, even small enhancements in this field will create remarkable savings in both time consumed and effort input in doing the search. Therefore, in light of the drawbacks associated with prior art, there is a need for a system and method for searching for good quality information without much intervention from the user. A need also exists for searching for good quality information in limited time for certain time critical applications. Finally, a need exists for a system and method for automatically providing information that has been analysed according to the needs of the user.

### Summary

An object of the current invention is to provide a system and method for searching for good quality information without any intervention from the user.

Another object of the invention is to provide system and method for automatically providing information that has been analysed according to the needs of the user.

Yet another object of the invention is to provide good quality information in limited time for certain time critical applications.

The present invention is a system and method for automatically providing users with good quality information from plurality of information sources. The information supplied to the user from first information source is filtered to extract relevant information. This information is then categorized and stored in the host database. Further analysis is done on categorized information to identify further search criteria. Based on further search criteria new search is carried out in a second information source to obtain related information. The results of further search and the stored information are presented to the user in a user-friendly format.

### Short Description of Drawings

The preferred embodiments of the invention will hereinafter be described in conjunction with the appended drawings provided to illustrate and not to limit the invention, wherein like designations denote like elements, and in which:
FIG. 1 is a block diagram that illustrates an overview of the system in accordance with a preferred embodiment of the present invention;
FIG. 2 is a flowchart that illustrates a method of searching information automatically, in accordance with the preferred embodiment of the current invention;
FIG 3 illustrates an exemplary representation of database tables that can be used to implement an embodiment of the present invention;
FIG. 4 is a block diagram of a computer system useful for implementing components of the present invention.

### Steps to Execute the Invention

The present invention is directed to a system and method for searching information automatically according to analysed results. The invention enables collection and analysis of information without any active involvement from the user. Further research is done based on the results of the analysis and this information is presented to the user. In this manner, the invention provides intelligent information that has been already analysed according to the needs of the user.

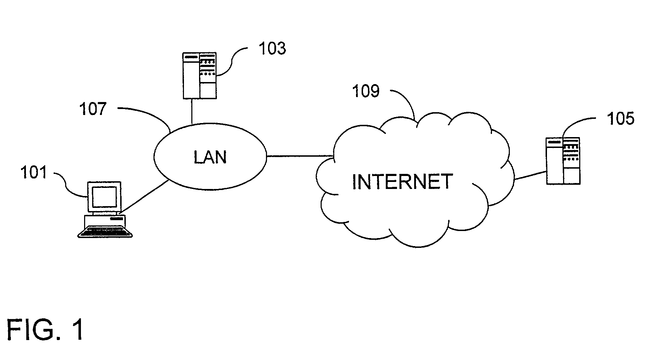

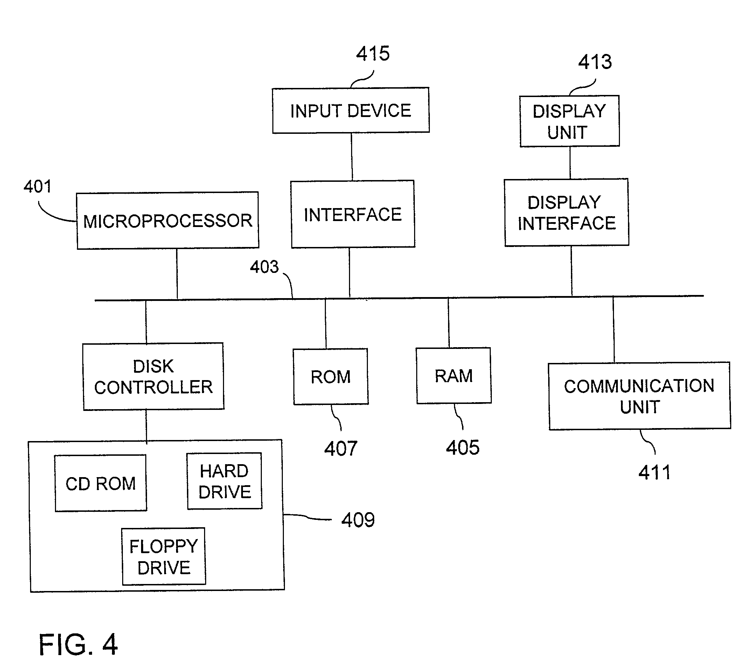

FIG. 1 is a block diagram that illustrates an overview of the system in accordance with a preferred embodiment of the present invention. A host computer system 101 containing a host database is connected to a plurality of information sources. Two such information sources 103 and 105 are shown. It must be apparent that the two information sources shown are for illustrative purposes only. The host computer system can be connected to several such information sources. An example of a general purpose host computer system is presented and described later with reference to FIG. 4. The information sources are databases containing information, which can be located in a computer network such as Local Area Network (LAN) 107, Metropolitan Area Network (MAN), Wide Area Network (WAN) and the Internet 109. For example, several financial institutions have databases containing details on daily stock quotes and other related information. In case these databases lie in the same network as the host computer, then these can be directly accessed otherwise these databases can be accessed through the Internet.

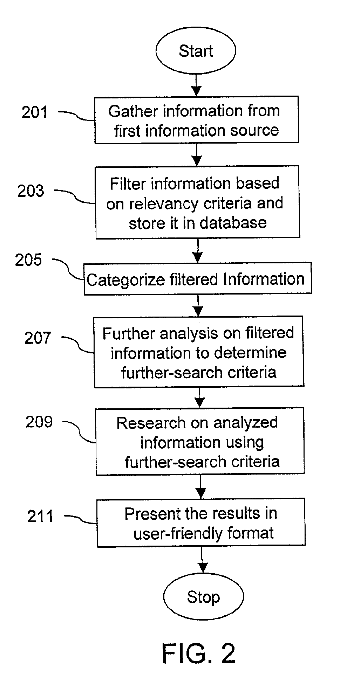

The overall functioning of the system is illustrated in FIG. 2, which is a flowchart that illustrates the method of searching information automatically in accordance with the preferred embodiment of the current invention. Information obtained from various information sources is fed to the host database at step 201. This information can be supplied to the system using manual efforts or using push technology. In simplest terms, push technology automates the search and the retrieval of information. The user defines the criteria for search of information and the push application automatically searches one or more databases for specific information and delivers it as per the user's directions. Push systems exist for both Internet and Intranet applications. In Internet applications, push technology scans several content providers to obtain information pertaining to the criteria specified by the user. For example, the user may obtain industry information, news, stock quotes etc. as part of his customized desktop bulletin. In Intranet applications, push technology can send up-to-date company news and information directly to the employee's desktop. There are many software products implementing push technology that can be used in the present invention. Some of them include: PointCast Business Network™ by PointCast, Castanet® by Marimba ®, Downtown™ by inCommon, Microsoft's Internet Explorer™ with Webcasting capabilities and Netscape's Netcaster™.

Not all information obtained at step 201 may be desired by the user. The system filters out irrelevant information and stores relevant information in the database at step 203. This can be done using relevance criteria set by the user. The relevance criteria may include key words or other specific conditions that check for relevance of retrieved information. For example, consider the case of a person, getting sports news through push technology to his/her computer desktop. He/she might be interested in only the news relating to football and basketball. Therefore, he/she can set his/her relevance criteria such that only those news items relating to football and basketball are stored in the database. The current invention scans each document or data for items of interest defined by the keywords. If the keywords are found in the document, the document is typically identified as relevant, and therefore saved in the database. The relevance criteria can also include other search criteria such as time stamp of the document or data. The date of the document can be used to identify its relevance.

To assist the user, the filtered information is categorized into several categories at step 205. Categorization can be done according to preselected characteristics. The preselected characteristics are defined by the user. Preselected characteristics may include certain headings under which the information can be placed. In case of a user getting pushed information from various sources, preselected characteristics help in arranging obtained information into specific user defined categories for easy reference. Preselected characteristics comprise specific words or a combination of words that identify the obtained information. For example, when a user gets latest technical updates from a technical news provider, he/she can define the preselected characteristics such that news items relating to the same technical field are presented together. Therefore, all news items or articles relating to a particular technical field are stored under the same category. The categorizing can be at a second level as well. For example, within a particular technical field, the news items can be further categorized according to the name of the company or the institution to which the technical news item relates.

Further analysis on the categorized information is done to identify important aspects of the information, at step 207. This can depend on the type of document or data being analysed. For example, if the document is a technical article, then the name of the author can be extracted as a keyword. Certain words from the title of the article can also form part of the keyword. The most frequently occurring words can also be taken as keywords.

As a result of this analysis, certain key words are identified. These keywords form the criteria for further search and are referred to as further search criteria. Further search criteria can also include other parameters besides the identified keywords. For example, the profile of the user can be used to form part of the further search criteria, i.e. the relevance of the information will be determined based on the profile of the user. The user can specify other aspects, which can constitute further search criteria such as time stamp of the data. The further search criteria are used as the basis for further information search from another information source at step 209. The search for related information from a second information source is initiated using agents or other programs. These agents are triggered to start automatically after the information has been analysed and keywords identified. The triggering of agents can be at predefined intervals, e.g. once a week etc. Over the Internet, commercial search engines can be used. The identified keywords are used to form the search query for these search engines. Further search can also be carried out over a plurality of information sources.

Information obtained from further search is thereafter classified and presented to the user in a user-friendly manner at a pre-selected place, at step 211. The presentation of the results is organized according to the categories identified at step 207. In this manner, the system enables automatically providing the user of the system with "intelligent" information that has been already analysed according to his/her needs.

The present invention can be particularly useful in time critical applications. For example, the invention can be of significant help to people trading in the stock markets. Data relating to share prices, new issues etc. can be analysed by the system. Related information on how the markets reacted in a similar situation in the past can be automatically found from various information sources and presented to the user. Such information can help the user make his decision in an efficient and effective manner.

Instead of presenting the results to the user, the system can trigger certain user-defined actions based on the results of further search. The user-defined actions may include sending an e-mail or instant message to certain people specified by the user. For example, in case of financial institutions, in the event of finding certain important information, the system can be programmed to send an email to all employees or store the information into an information portal located in LAN.

In an alternative approach, steps 203-209 can be repeated number of times using the further search results to obtain more detailed information.

The overall working of the system will now be described with the help of two examples.

### EXAMPLE 1

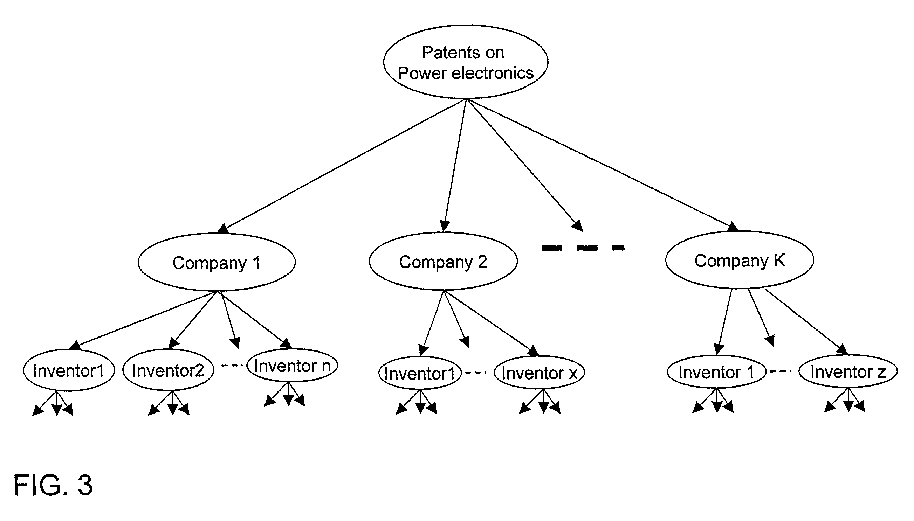

Consider the case of users getting patent applications on power electronics pushed to their host system. FIG. 3 illustrates an exemplary representation of database tables that can be used in this example. The user has subscribed to an information provider that pushes patent applications on power electronics on a regular basis. The information can be pushed continuously. The information can also be pushed on a daily or weekly basis. Relevant information from the pushed information is extracted and stored at a preselected place in the database. Patent applications on power electronics are categorized according to the name of the company to which they have been assigned. The categorization can be based on other factors also. The user can define the characteristics according to which the information needs to be categorized. For example, patent applications on power electronics can be further categorized under the name of the company to which they have been assigned. Any new patent pushed to the database will be categorized under one of the company names. In case the company name does not already exist in the database, the same will be added to the database.

Patents under each company are further categorized according to inventor name. An agent is activated for further search. The inventor name is taken as the search key for searching for further information relating to the inventor and his/her field of interest. The information search is carried out over the Internet using search engines such as Google™, Altavista ®, Northern Light™ or People Finder®. Other commercially available search engines can also be used. The search results are stored in the database as information about the inventor.

Results of the search are presented in a user-friendly manner to the user at a preselected place. The preselected place can be display unit of the computer system on which the current invention is implemented. The results can also be placed in an information portal located in LAN for access by the users of the LAN. For example, patents assigned to ABB are presented on a page titled 'ABB PATENTS'. The page will contain a list of key inventors of ABB whose patents are stored in the database as hyperlinks. A separate document, containing details on the inventor obtained from further search, is presented to the user on activation of the corresponding hyperlink. In this manner, the system enables automatic presentation of good quality information.

### EXAMPLE 2

The current invention finds use in time critical applications as well. Consider the example of SCADA (Supervisory Control And Data Acquisition) systems used in an electricity distribution system. In SCADA systems, data from variety of remote stations is collected at one place (master station) in order to control various equipment and processes. Various events occurring at various points in the power distribution channel are continuously pushed and stored in the database located at master station. The pushed information is categorized according to the characteristics already defined by the user. For example, the user can define the relative significance of different information. Important information that could cause severe problems is classified as alarms. The alarms are further classified according to the possible reason and severity of the alarm. Possible reasons could be a problem in the electricity distribution line, such as the falling of a tree on the distribution line, or problem in one of the power plants. Therefore, one alarm can indicate problems on energy transmission from a power plant while another alarm can indicate problems in the power plant etc.

After the pushed information is classified according to the meaning of the alarm, an agent is activated and it initiates information search from Energy Management Systems, which could be a set of databases or other sources of information. The agent retrieves relevant information from these databases. For example, the agent can retrieve information on the load of power plants, information on the energy consumption, actions taken in similar situations etc. The retrieved information is particularly useful to the operator. The information helps in deciding the actions that need to be taken for assuring the electricity distribution to all consumers without any problems. Examples of actions that an operator can take, with the help of information available to him as a result of the current invention, are: increasing the load in other plants, buying energy or deciding where load shedding can be done etc. Information relating to each of these will be presented to the user as a result of the automated search. The results of the search can be presented to the user in any desired manner. The user may obtain the information on the display unit of the computer system. The information can also be printed on paper for enabling further decisions to be taken by the operator.

In this manner, the present invention can add significantly to the 'intelligence' of the electricity generation, distribution and management systems. Precious information can be provided to the operator in the moments that are critical for error-free distribution of electricity. Similarly the invention can be used in areas of oil and gas refining, telecommunications, transportation, and water and waste control, where the time in which the critical information is obtained is as important as the information itself.

The current invention can also find immense application in the areas of technology and financial information, where the value of the data is determined by both its relevance and its timeliness. People can spend less time in searching for information and more time in the tasks that need to be performed based on the information, thereby increasing their effectiveness.

The present invention may be implemented using software, hardware or a combination thereof. The invention may be implemented in a computer system or any other processing system. The computer system can be a desktop computer, laptops, PDAs, mobile phones and all such similar devices. One such computer system has been illustrated in FIG 4. The computer system comprises a microprocessor 401. The microprocessor is connected to a communication bus 403. The computer system also includes a Random Access Memory (RAM) 405, a Read Only Memory (ROM) 407 and secondary memory 409. Secondary memory 409 can be a hard disk drive or a removable storage drive such as a floppy disk drive, optical disk drive etc. Secondary memory 409 can also be other similar means for loading computer programs or other instructions into the computer system. The computer system also includes a communication unit 411. Communication unit 411 allows the computer to connect to other databases and the Internet. Communication unit 411 allows the transfer as well as reception of data from other databases. Communication unit 411 may include a modem, an Ethernet card or any similar device, which enables the computer system to connect to the Internet and other databases. The computer system also includes a display unit 413, for presenting the search results to the user in a friendly manner and an input device 415 to enable the user to input various criteria.

In one embodiment, the current invention is implemented as software. Computer programs are stored in RAM or secondary memory 409. The processor executes these programs. The execution of these programs enables the computer system to perform the functions of the invention as described herein.

In another embodiment, the current invention can be implemented in hardware. One way of implementing as hardware is through the use of application specific integrated circuits (ASICs). The exact manner in which such a hardware implementation will be made so as to perform all the functions as described herein, will be apparent to one skilled in the relevant art.

In yet another embodiment, the invention can be implemented using a combination of both hardware and software.

While various embodiments of the invention have been illustrated and described, it will be clear that the invention is not limited to these embodiments only. Numerous modifications, changes, variations, substitutions and equivalents will be apparent to those skilled in the art without departing from the spirit and scope of the invention as described in the claims.

## Claims

1. A method for providing users with information from a plurality of information sources, the information analysed according to needs of the user, **characterized in that** the method comprises the following steps, which are performed automatically without any intervention from the user:
a. retrieving information from a first information source;
b. filtering the information according to relevance criteria;
c. storing the filtered information;
d. analyzing the stored information to identify further search criteria;
e. doing research on the analysed information from the plurality of information sources using the further search criteria to obtain related information; and
f. presenting results of the research along with the stored information to the user in a user friendly format; or
g. triggering a user-defined action based on the research of the analysed result;

2. The method according to claim 1, **characterized in that** the step of analysing the information comprises the steps of:
a. categorizing the filtered information based on pre-selected characteristics; and
b. identifying further search criteria from the categorized information.

3. The method according to claim 1, **characterized in that** the information source is the Internet or a database located in a computer network.

4. The method according to claim 1, **characterized in that** the first information source is one of the plurality of information sources.

5. The method according to claim 1, **characterized in that** the step of filtering the information is done using relevance criteria defined by the user.

6. The method as recited in claim 1, **characterized in that** the user-defined action is sending an alarm message to the user.

7. A system for providing users with information from a plurality of information sources, the information analysed according to needs of the user, the system comprising:
a. means for retrieving information from at least one first information source;
b. means for filtering the information according to relevance criteria;
c. means for storing the filtered information;
d. means for analyzing the stored information to identify further search criteria;
e. means for doing research on the analysed information from the plurality of information sources using the further search criteria to obtain related information; and either
f. means for presenting the results of the research along with the stored information to the user in a user-friendly format, or
g. means for triggering a user-defined action based on the research of the analysed result.

8. The system as recited in claim 7, **characterized in that** the means for analysing the information further comprises:
a. means for categorizing the filtered information based on pre-selected criteria; and
b. means for extracting keywords from the categorized information.

9. The system according to claim 7, **characterized in that** the information source is the Internet or a database located in a computer network.

10. The system according to claim 7, **characterized in that** the first information source is one of the plurality of information sources.

11. The system according to claim 7, **characterized in that** the relevance criteria is defined by the user.

12. The system according to claim 7, **characterized in that** the user-defined action is sending an alarm message to the user.

13. The system according to claim 7, **characterized in that** the system is embodied as a computer program.
